# FASCICULE DE BREVET EUROPEEN

(11) **EP 1 227 747 B1**
(45) Date de publication et mention de la délivrance du brevet: **29.09.2004**
(21) Numéro de dépôt: 01974397.0
(22) Date de dépôt: 27.09.2001
(51) Int. Cl.: A47J 43/08, A47J 43/07

(54) **RECIPIENT DE TRAVAIL POUR ROBOT MENAGER, COMPORTANT UN AXE D'ENTRAINEMENT ROTATIF ETANCHE**
SCHÜSSEL FÜR KÜCHENMASCHINE MIT EINER ABGEDICHTETEN ANTRIEBSWELLE
WORKING VESSEL FOR HOUSEHOLD FOOD PROCESSOR, COMPRISING A SEALED ROTARY DRIVE SHAFT

(30) Priorité: 04.10.2000 FR 0012687
(43) Date de publication de la demande: 07.08.2002
(73) Titulaire: SEB S.A., 69130 Ecully (FR)
(72) Inventeur: ASTEGNO, Jean, Paul, F-64420 Espoey (FR); TOMPA, Carole, F-65000 Tarbes (FR); MACABIAU, Serge, F-65310 Horgues (FR); PEYRAS, Lionel, F-65100 Jarret (FR)
(86) Numéro de dépôt international: PCT/FR2001/002990
(87) Numéro de publication internationale: WO 2002/028248

(56) Documents cités:
- FR-A- 2 560 031
- FR-A- 2 787 311
- US-A- 6 076 452

## Description

La présenté invention concerne le domaine technique général des appareils électroménagers de préparation culinaire comportant un récipient de travail associé à un ou plusieurs outils de travail des aliments, ledit récipient étant placé sur un boîtier dans lequel est disposée une motorisation. La présente invention se rapporte plus particulièrement au récipient.

Il est connu d'entraîner les outils de travail au moyen d'un axe d'entraînement rotatif étanche disposé dans le fond du récipient. Un tel axe peut être démontable et comporte alors une pièce de transmission associée à une bague de verrouillage. La partie supérieure de la pièce de transmission est disposée à l'intérieur du récipient. La partie inférieure de la pièce de transmission traverse un passage du fond du récipient. La bague de verrouillage est montée de manière amovible sur la partie inférieure de la pièce de transmission. Une telle construction permet d'éviter la présence d'une cheminée dans le fond du récipient.

Pour obtenir une étanchéité entre la pièce de transmission et le récipient, un joint à lèvres est monté sur la partie supérieure de la pièce de transmission disposée dans le récipient, ou bien sur le fond du récipient autour d'un passage prévu pour recevoir la partie inférieure de la pièce de transmission. La lèvre du joint vient en contact avec une surface de glissement, généralement métallique, disposée sur la face intérieure du récipient autour du passage, ou alors sur une partie de la pièce de transmission agencée en regard du récipient. Dans l'un ou l'autre cas, des surfaces de contact sont prévues sur la bague de verrouillage et sur la face extérieure du fond disposée en regard de ladite bague, de manière à conserver une étanchéité entre le joint et la surface de glissement, même en l'absence d'effort axial sur la pièce de transmission.

Plusieurs techniques sont utilisées pour obtenir une étanchéité entre la surface de contact intérieure et le fond du récipient. La surface de contact peut être formée par un oeillet métallique serti dans le passage du récipient sur un joint annulaire. Un tel procédé permet d'obtenir une bonne étanchéité. Toutefois une bonne précision est nécessaire pour la mise en place de l'oeillet. La surface de contact peut également être formée par un oeillet métallique surmoulé dans le fond du récipient. Une telle construction correspond au récipient de l'appareil du document US 6 076 452. Toutefois le vieillissement de la matière du récipient peut entraîner des craquelures autour de l'oeillet, en particulier pour un récipient réalisé en matière plastique.

Ainsi, les techniques connues présentent l'inconvénient d'être onéreuses ou d'une fiabilité limitée. De plus les interfaces entre le récipient et l'oeillet qui sont au contact des aliments, de l'eau ou de l'air, peuvent être difficiles à nettoyer.

L'objet de la présente invention est de proposer un récipient de travail pour appareil électroménager de préparation culinaire, comportant un axe d'entraînement rotatif étanche, dont la fabrication soit peu onéreuse et dont la construction soit fiable.

Un autre objet de la présente invention est de proposer un récipient de travail pour appareil électroménager de préparation culinaire, comportant un axe d'entraînement rotatif étanche démontable, dont le nettoyage soit facilité.

Les objets assignés à l'invention sont atteints avec un récipient de travail pour appareil électroménager de préparation culinaire, comportant une cuve dans le fond de laquelle est ménagée une ouverture obturée au moins partiellement par une pièce annulaire, un joint annulaire statique étant monté entre ladite pièce annulaire et ladite cuve, un entraîneur rotatif étanche étant monté dans un passage de ladite pièce annulaire, l'entraîneur rotatif étanche comprenant une pièce de transmission portant un joint annulaire tournant venant en appui sur une surface de glissement supérieure de la pièce annulaire, la surface de glissement supérieure étant ménagée sur la pièce annulaire au droit de l'ouverture, l'entraîneur rotatif étanche comportant des moyens de verrouillage associés à la pièce de transmission et susceptibles de venir en.appui contre la face extérieure du fond de la cuve et/ou de la pièce annulaire sous l'effet du joint annulaire tournant, du fait qu'un joint annulaire statique est monté entre la pièce annulaire et la cuve. En d'autres termes, la surface de glissement supérieure est ménagée sur la pièce annulaire dans une zone appartenant au volume cylindrique dont la section correspond à celle de l'ouverture ménagée dans le fond de la cuve, et dont l'axe correspond à celui de l'entraîneur rotatif étanche. Ainsi la liaison entre la pièce annulaire et la cuve peut être effectuée en périphérie de la surface de glissement supérieure, et non au niveau de la surface de glissement supérieure comme dans le cas du sertissage d'un oeillet métallique. Une telle construction est peu onéreuse tout en présentant une étanchéité fiable. De plus le nettoyage du récipient est particulièrement aisé lorsque l'entraîneur rotatif étanche est démontable. Le joint annulaire statique peut consister en un joint fixe tel que par exemple un joint torique, ou encore être formé par un anneau de matière solidifiée qui soit alimentaire et étanche, telle que par exemple certains matériaux à base de silicone. La liaison entre la pièce annulaire et la cuve peut être effectuée par collage, par assemblage, notamment à baïonnette, ou par tout autre moyen approprié.

Avantageusement, le joint annulaire statique est disposé autour de la surface de glissement supérieure entre la face supérieure de la pièce annulaire et la cuve. Cette disposition permet de limiter les aspérités entre la pièce annulaire et la cuve, ce qui facilite le nettoyage.

Selon un mode de réalisation, la cuve comporte autour de l'ouverture une série de rampes alternant avec une série de dégagements prévus pour l'introduction de rampes ménagées sur la pièce annulaire et alternant avec une série de dégagements prévus pour l'introduction des rampes de la cuve. Ce montage de type baïonnette permet d'obtenir de manière économique une bonne étanchéité.

Avantageusement alors le joint annulaire statique est disposé entre la face supérieure de la pièce annulaire et une collerette ménagée autour de l'ouverture au dessus des rampes de la cuve. Cette disposition permet d'utiliser une pièce annulaire ne comportant pas de parties retournées.

Avantageusement encore, au moins une butée est prévue entre la collerette et les rampes de la cuve. Cette disposition permet de faciliter la mise en place de la pièce annulaire.

Avantageusement encore, la pièce annulaire comporte des moyens d'entraînement disposés dans la zone comprise entre la surface de glissement supérieure et le passage. Cette disposition permet de faciliter le positionnement de la pièce annulaire tout en assurant l'étanchéité entre le joint tournant et la surface de glissement supérieure. Cette disposition permet aussi de faciliter un éventuel retrait de la pièce annulaire. Selon un mode de réalisation les moyens d'entraînement sont formés par deux encoches ménagées en périphérie du passage. Selon un mode de réalisation préféré, la pièce annulaire est une pièce plane, telle qu'une rondelle. Toutefois la périphérie de la pièce annulaire peut alors présenter une série de découpes pour former des rampes.

Selon un mode de réalisation préféré, la pièce annulaire est une pièce métallique.

Selon un mode de réalisation préféré, le joint annulaire tournant comporte une lèvre venant en appui sur la surface de glissement supérieure.

Selon un mode de réalisation préféré, les moyens de verrouillage de l'entraîneur rotatif étanche sont formés par une bague assemblée par baïonnette avec la pièce de transmission. D'autres assemblages démontables, par exemple par vissage, sont également envisageables. Toutefois, l'entraîneur rotatif étanche n'est pas nécessairement démontable.

Avantageusement les moyens de verrouillage sont susceptibles de venir en appui contre une surface de contact inférieure ménagée sur la pièce annulaire au droit de l'ouverture du fond de la cuve, notamment en l'absence de sollicitation axiale du joint annulaire tournant.

Les objets assignés à l'invention sont également atteints avec un appareil électroménager de préparation culinaire comportant un boîtier sur une face supérieure duquel est disposé un axe d'entraînement prévu pour entraîner un entraîneur rotatif étanche monté dans un passage pratiqué dans le fond d'un récipient de travail présentant les caractéristiques précitées.

L'invention sera mieux comprise à l'étude d'un exemple de réalisation, pris à titre nullement limitatif, et illustré dans les figures annexées dans lesquelles :
- la figure 1 est une vue partielle en coupe verticale d'un appareil électroménager de préparation culinaire dont le récipient de travail comporte un axe d'entraînement rotatif selon l'invention,
- la figure 2 est montre un détail de la figure 1,
- la figure 3 est une vue de dessus d'un élément prévu pour être monté dans le fond du récipient de travail,
- la figure 4 est une vue de dessous du fond du récipient de travail dans lequel l'élément présenté à la figure 3 a été retiré.

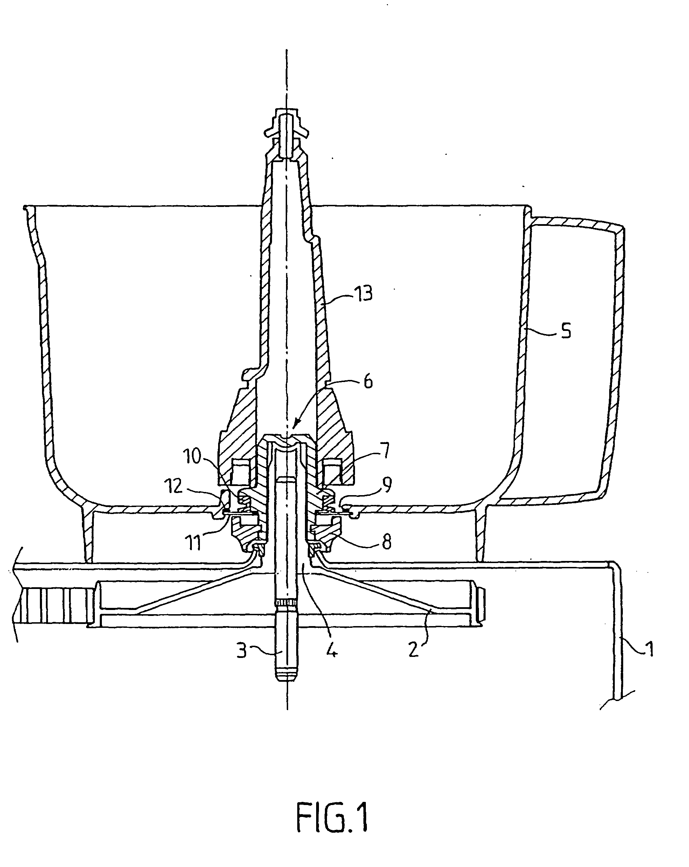

La figure 1 montre un appareil électroménager de préparation culinaire multifonctions comportant un boîtier 1 dans lequel est disposé une roue 2 montée sur un axe 3 vertical et entraînée par un moteur (non montré aux figures). Le moyeu de la roue 2 forme un axe d'entraînement 4 émergeant d'une ouverture du boîtier 1. Un récipient de travail 5 est monté sur le boîtier 1. Le fond du récipient 5 présente un passage 16 dans lequel est monté un entraîneur rotatif étanche 6. L'entraîneur 6 est prévu pour coopérer avec l'axe d'entraînement 4 lorsque le récipient 5 est en place sur le boîtier 1. L'entraîneur 6 est prévu pour recevoir et entraîner un moyeu 13 portant, de manière amovible ou non, un ou plusieurs outils de travail. L'entraîneur 6 monté dans le passage 16 comporte une pièce de transmission 7 associée à des moyens de verrouillage 8.

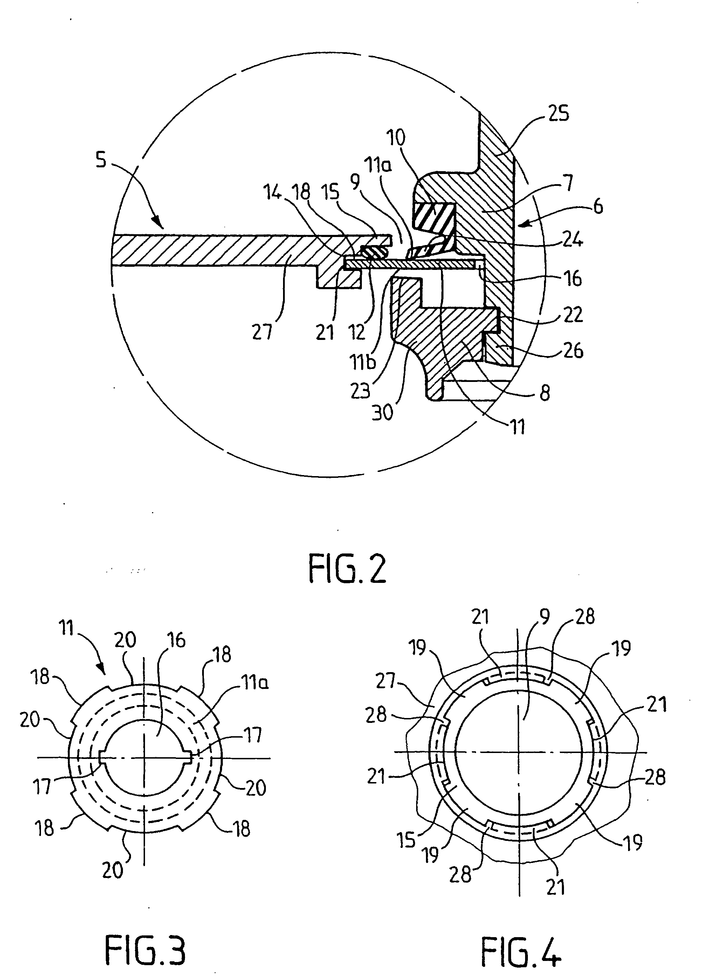

Tel que mieux visible à la figure 2, la pièce de transmission 7 présente une partie supérieure 25, disposée au dessus du passage 16, et une partie inférieure 26, susceptible d'être engagée dans le passage 16 depuis l'intérieur du récipient 5. La pièce de transmission 7 comporte également une conformation interne prévue pour être engagée par l'axe d'entraînement 4, tel que montré à la figure 1.

La partie supérieure 25 de la pièce de transmission 7 porte un joint annulaire tournant 10 venant en appui sur une surface de glissement supérieure 11a prévue sur la face supérieure du fond du récipient 5 autour du passage 16. Le joint tournant 10 est par exemple collé ou surmoulé sur la pièce de transmission 7. La partie inférieure 26 engagée dans le passage 16 est assemblée par baïonnette 22 avec une bague 30 formant les moyens de verrouillage 8.

Sous l'action élastique du joint 10, la bague de verrouillage 30 peut venir en appui contre une surface de contact inférieure 11b prévue sur la face inférieure du fond du récipient 5 autour du passage 16.

Tel que montré aux figures 1 et 2 lorsque le moyen 13 est en place dans le récipient 5, l'effort exercé sur le joint 10 écarte de préférence les moyens de verrouillage 8 de la surface de contact inférieure 11b. Cette position permet de limiter les échauffements lors de l'entraînement du moyeu 13 par l'entraîneur 6. Toutefois un glissement de la bague 30 sur la surface 11b est envisageable.

Ainsi l'entraîneur rotatif 6 est démontable et présente une étanchéité avec le fond du récipient 5.

La surface de glissement supérieure 11a est ménagée sur la face supérieure d'une pièce annulaire 11 montée dans une ouverture 9 du fond d'une cuve 27. La cuve 27 est par exemple obtenue par moulage d'une matière plastique. La surface de contact 11b est ménagée sur la face inférieure de la pièce annulaire 11.

L'entraîneur rotatif 6 présente une zone de contact 23, ménagée sur la partie supérieure de la bague formant les moyens de verrouillage 8, prévue pour venir en appui sur la surface de contact inférieure 11b lorsque le joint 10 peut exercer son effort de rappel sur l'entraîneur 6. Le joint annulaire tournant 10 présente une lèvre 24 venant en appui sur la surface de glissement supérieure 11a.

Le fond de la cuve 27 forme une collerette annulaire 15 dans la partie supérieure de l'ouverture 9. Un joint annulaire statique 12 est prévu entre la collerette 15 et la face supérieure de la pièce 11. Le joint statique 12 est par exemple un joint torique disposé entre la face supérieure de la pièce 11 et la face inférieure de la collerette 15. La pièce annulaire 11 comporte en son centre le passage 16 dans lequel est engagée la partie inférieure 26 de la pièce de transmission 7.

Tel que montré aux figures 2 à 4, la pièce annulaire 11 comporte sur sa périphérie une série de rampes externes 18 alternant avec une série de dégagements 20, prévus pour un montage à baïonnette dans l'ouverture 9 de la cuve 27. A cet effet, la cuve 27 comporte dans la partie inférieure de l'ouverture 9, sous la collerette 15, une série de rampes internes 19 alternant avec une série de dégagements 21. Une rainure 14 est ménagée entre la face supérieure de chaque rampe interne 19 et la face inférieure de la collerette 15 pour recevoir l'une des rampes externes 18 de la pièce annulaire 11.

Tel que montré à la figure 3, la pièce annulaire 11 présente sur sa périphérie quatre rampes externes 18. Tel que montré à la figure 4, la cuve 27 présente autour de l'ouverture 9 quatre rampes internes 19 s'étendant vers le centre de ladite ouverture, alternant avec quatre dégagements 21 laissant un passage de diamètre supérieur. Une série de butées 28 est prévue à l'une des extrémités de chacune des rainures 14 pour arrêter les rampes externes 18. Dans l'exemple de réalisation illustré aux figures, les butées 28 joignent l'une des extrémités de chacune des rampes internes 19 à la face inférieure de la collerette 15.

La pièce annulaire 11 présente des moyens d'entraînement 17 afin de faciliter sa mise en place ou son retrait. Les moyens d'entraînement 17 sont disposés dans la zone comprise entre la surface de glissement supérieure 11a et le passage 16. Tel que montré à la figure 3, les moyens d'entraînement 17 sont formés par deux encoches ménagées en périphérie du passage 16.

La pièce 11 est de préférence métallique, pour des raisons de friction, d'usure, de ténacité et de coût. Toutefois seules les surfaces de la pièce 11 en contact avec le joint tournant 10 et les moyens de verrouillage 8 doivent présenter un faible coefficient de frottement associé à une résistance élevée à l'usure. Une pièce 11 comportant un revêtement présentant les caractéristiques précitées sur les surfaces de glissement 11a ou de contact 11b peut par exemple être envisagée.

La présente invention s'utilise de la manière suivante.

Lors du montage du récipient 5, la cuve 27 est retournée et le joint statique 12 est disposé sur la collerette interne 15. La pièce 11 est alors mise en place sur le joint statique 12 en passant les rampes externes 18 dans les dégagements 21 de l'ouverture 9 du fond de la cuve 27 . La pièce 11 peut alors être tournée en force dans les rainures 14, par exemple à l'aide d'un outil engagé dans les moyens d'entraînement 17, pour amener les bords latéraux des rampes externes 18 contre les butées 28. La pièce 11 est alors en place et obture de manière étanche l'ouverture 9 du fond de la cuve 27 à l'exception du passage 16 laissé libre pour l'introduction de l'entraîneur rotatif étanche 6. Si désiré, la pièce 11 peut être démontée, par exemple au moyen de l'outil ayant servi au montage. La pièce annulaire 11 forme un palier sur lequel tourne l'entraîneur rotatif étanche 6 formé par la pièce de transmission 7 et les moyens de verrouillage 8. On remarquera que le joint à lèvres 24 de la pièce de transmission 7 prend appui sur la surface de glissement supérieure 11a disposée au droit de l'ouverture 9 ménagée dans le fond de la cuve 27, tandis que la bague 30 formant les moyens de verrouillage 8 est susceptible de prendre appui contre la surface de contact inférieure 11b présentant un diamètre légèrement supérieur à celui de ladite ouverture, lorsque le joint 24 peut exercer son effort de rappel sur l'entraîneur 6.

De nombreuses améliorations et/ou modifications peuvent être apportées à ce récipient et à cet appareil dans le cadre des revendications.

Les variantes suivantes peuvent notamment être envisagées.

La collerette entourant l'ouverture du fond de la cuve pourrait être disposée au dessous des rampes de ladite cuve, le joint statique étant alors monté entre la face supérieure de ladite collerette et la face inférieure de la pièce annulaire.

La pièce de transmission et les moyens de verrouillage appartenant à l'entraîneur rotatif étanche peuvent être assemblées par d'autres moyens qu'un verrouillage à baïonnette, par exemple par vissage. L'entraîneur rotatif étanche peut également être indémontable, et par exemple être assemblé par collage ou par vissage.

La pièce annulaire peut également être montée dans le fond de manière définitive, par exemple. par collage.

La surface de contact inférieure peut être ménagée au moins partiellement sur la face inférieure de la cuve au lieu d'être ménagée uniquement sur la face inférieure de la pièce annulaire.

Un moyen d'étanchéité entre la collerette et la face supérieure de la pièce annulaire autre qu'un joint statique monté entre la face inférieure de la collerette et la face supérieure de la pièce annulaire peut être prévu, par exemple un joint silicone déposé après le montage de la pièce annulaire dans le fond de la cuve.

D'autres moyens d'entraînement que des encoches peuvent être envisagés par exemple une ou plusieurs languettes repliées vers la partie inférieure de la pièce annulaire.

D'autres moyens de verrouillage qu'une bague assemblée sur la pièce de transmission pourraient être envisagés, par exemple des pattes élastiques issues de la partie inférieure de la pièce de transmission comportant chacune un crochet s'engageant avec la face inférieure de la pièce annulaire.

La présente invention n'est pas limitée aux appareils de préparation culinaire multifonctions, et à leurs récipients, dans lesquels les outils de travail sont montés de manière amovible sur l'entraîneur rotatif étanche par l'intermédiaire du moyeu.

La présente invention concerne également les appareils dans lesquels l'outil de travail est fixé sur l'entraîneur, tel que par exemple les appareils de type blender prévus plus particulièrement pour les préparations liquides.

## Revendications

1. Récipient de travail pour appareil électroménager de préparation culinaire, comportant une cuve (27) dans le fond de laquelle est ménagée une ouverture (9) obturée au moins partiellement par une pièce annulaire (11), un entraîneur rotatif étanche (6) étant monté dans un passage (16) de ladite pièce annulaire, l'entraîneur rotatif étanche (6) comprenant une pièce de transmission (7) portant un joint annulaire tournant (10) venant en appui sur une surface de glissement supérieure (11a) de la pièce annulaire (11), la surface de glissement supérieure (11a) étant ménagée sur la pièce annulaire (11) au droit de l'ouverture (9), l'entraîneur rotatif étanche (6) comportant des moyens de verrouillage (8) associés à la pièce de transmission (7) et susceptibles de venir en appui contre la face extérieure du fond de la cuve (27) et/ou de la pièce annulaire (11) sous l'effet du joint annulaire tournant (10), **caractérisé en ce qu'**un joint annulaire statique (12) est monté entre la pièce annulaire (11) et la cuve (27).

2. Récipient de travail selon la revendication 1, **caractérisé en ce que** le joint annulaire statique (12) est disposé autour de la surface de glissement supérieure (11a) entre la face supérieure de la pièce annulaire (11) et la cuve (27).

3. Récipient de travail selon l'une des revendications 1 ou 2, **caractérisé en ce que** la cuve (27) comporte autour de l'ouverture (9) une série de rampes (19) alternant avec une série de dégagements (21) prévus pour l'introduction de rampes (18) ménagées sur la pièce annulaire (11) et alternant avec une série de dégagements (20) prévus pour l'introduction des rampes (19) de la cuve (27).

4. Récipient de travail selon la revendication 3, **caractérisé en ce que** le joint annulaire statique (12) est disposé entre la face supérieure de la pièce annulaire (11) et une collerette (15) ménagée autour de l'ouverture (9) au dessus des rampes (19) de la cuve (27).

5. Récipient de travail selon la revendication 4, **caractérisé en ce qu'**au moins une butée (28) est prévue entre la collerette (15) et l'une des rampes (19) de la cuve (27).

6. Récipient de travail selon l'une des revendications 3 à 5, **caractérisé en ce que** la pièce annulaire (11) comporte des moyens d'entraînement (17) disposés dans la zone comprise entre la surface de glissement supérieure (11a) et le passage (16).

7. Récipient de travail selon l'une des revendications 1 à 6, **caractérisé en ce que** la pièce annulaire (11) est une pièce plane.

8. Récipient de travail selon l'une des revendications 1 à 7, **caractérisé en ce que** la pièce annulaire (11) est une pièce métallique.

9. Récipient de travail selon l'une des revendications 1 à 8, **caractérisé en ce que** le joint annulaire tournant (10) comporte une lèvre (24) venant en appui sur la surface de glissement supérieure (11a).

10. Récipient de travail selon l'une des revendications 1 à 9, **caractérisé en ce que** les moyens de verrouillage (8) de l'entraîneur rotatif étanche (6) sont formés par une bague assemblée par baïonnette (22), avec la pièce de transmission (7).

11. Récipient de travail selon l'une des revendications 1 à 10 **caractérisé en ce que** les moyens de verrouillage (8) sont susceptibles de venir en appui contre une surface de contact inférieure (11b) ménagée sur la pièce annulaire (11) au droit de l'ouverture (9).

12. Appareil électroménager de préparation culinaire comportant un boîtier (1) sur une face supérieure duquel est disposé un axe d'entraînement (4) prévu pour entraîner un entraîneur rotatif étanche (6) monté dans un passage (16) pratiqué dans le fond d'un récipient de travail (5), **caractérisé en ce qu'**il comporte un récipient de travail selon l'une des revendications précédentes.

## Patentansprüche

1. Arbeitsbehälter für eine Elektro-Küchenmaschine zum Zubereiten von Nahrungsmitteln, aufweisend eine Wanne (27), in deren Boden eine Öffnung (9) ausgebildet ist, welche zumindest teilweise durch ein ringförmiges Teil (11) verschlossen ist, wobei ein drehbares, dichtes Antriebselement (6) in einem Durchlass (16) des ringförmigen Teils angebracht ist, wobei das drehbare, dichte Antriebselement (6) einen Übertragungsteil (7) aufweist, der eine ringförmige, drehende Dichtung (10) trägt, welche sich an einer oberen Gleitfläche (11a) des ringförmigen Teils (11) abstützt, wobei die obere Gleitfläche (11a) auf dem ringförmigen Teil (11) senkrecht zur Öffnung (9) ausgebildet ist, wobei das drehbare, dichte Antriebselement (6) Verriegelungsmittel (8) aufweist, die dem Übertragungsteil (7) zugeordnet sind und unter der Wirkung der ringförmigen, drehenden Dichtung (10) an der Außenfläche des Bodens der Wanne (27) und/oder des ringförmigen Teils (11) in Anlage gelangen können, **dadurch gekennzeichnet, dass** eine ringförmige, unbewegliche Dichtung (12) zwischen dem ringförmigen Teil (11) und der Wanne (27) angebracht ist.

2. Arbeitsbehälter nach Anspruch 1, **dadurch gekennzeichnet, dass** die ringförmige, unbewegliche Dichtung (12) um die obere Gleitfläche (11a), zwischen der oberen Fläche des ringförmigen Teils (11) und der Wanne (27) angeordnet ist.

3. Arbeitsbehälter nach Anspruch 1 oder 2, **dadurch gekennzeichnet, dass** die Wanne (27) um die Öffnung (9) eine Reihe von Rampen (19) aufweist, die mit einer Reihe von Aussparungen (21) abwechseln, welche für das Einsetzen von Rampen (18) vorgesehen sind, die auf dem ringförmigen Teil (11) ausgebildet sind und mit einer Reihe von Aussparungen (20) wechseln, die für das Einsetzen der Rampen (19) der Wanne (27) vorgesehen sind.

4. Arbeitsbehälter nach Anspruch 3, **dadurch gekennzeichnet, dass** die ringförmige, unbewegliche Dichtung (12) zwischen der oberen Fläche des ringförmigen Teils (11) und einem Kragen (15) angeordnet ist, welcher um die Öffnung (9) und über den Rampen (19) der Wanne (27) ausgebildet ist.

5. Arbeitsbehälter nach Anspruch 4, **dadurch gekennzeichnet, dass** mindestens ein Anschlag (28) zwischen dem Kragen (15) und einer der Rampen (19) der Wanne (27) vorgesehen ist.

6. Arbeitsbehälter nach einem der Ansprüche 3 bis 5, **dadurch gekennzeichnet, dass** das ringförmige Teil (11) Antriebsmittel (17) aufweist, die in dem Bereich zwischen der oberen Gleitfläche (11a) und dem Durchlass (16) angeordnet sind.

7. Arbeitsbehälter nach einem der Ansprüche 1 bis 6, **dadurch gekennzeichnet, dass** das ringförmige Teil (11) ein ebenes Teil ist.

8. Arbeitsbehälter nach einem der Ansprüche 1 bis 7, **dadurch gekennzeichnet, dass** das ringförmige Teil (11) ein metallisches Teil ist.

9. Arbeitsbehälter nach einem der Ansprüche 1 bis 8, **dadurch gekennzeichnet, dass** die ringförmige, drehende Dichtung (10) eine Lippe (24) aufweist, die sich an der oberen Gleitfläche (11a) abstützt.

10. Arbeitsbehälter nach einem der Ansprüche 1 bis 9, **dadurch gekennzeichnet, dass** die Verriegelungsmittel (8) des drehbaren, dichten Antriebselementes (6) von einem Ring gebildet sind, welcher durch Bajonettverschluss (22) mit dem Übertragungsteil (7) zusammengefügt ist.

11. Arbeitsbehälter nach einem der Ansprüche 1 bis 10, **dadurch gekennzeichnet, dass** die Verriegelungsmittel (8) an einer unteren Kontaktfläche (11b) in Anlage gelangen können, welche auf dem ringförmigen Teil (11) senkrecht zur Öffnung (9) ausgebildet ist.

12. Elektroküchenmaschine zum Zubereiten von Nahrungsmitteln, aufweisend ein Gehäuse (1), wobei auf einer oberen Fläche des Gehäuses eine Antriebsachse (4) angeordnet ist, die dazu vorgesehen ist, ein drehbares, dichtes Antriebselement (6) anzutreiben, das in einem Durchlass (16) angebracht ist, welcher im Boden eines Arbeitsbehälter (5) ausgebildet ist, **dadurch gekennzeichnet, dass** sie einen Arbeitsbehälter nach einem der vorhergehenden Ansprüche aufweist.

## Claims

1. A working receptacle for a household electrical appliance for preparing food, comprising a bowl (27) with an opening (9) formed in the bottom thereof and closed at least partially by an annular part (11), a leaktight rotary driver (6) being mounted in a passage (16) of said annular part, the leaktight rotary driver (6) comprising a transmission piece (7) bearing on a rotary annular gasket (10), itself pressing against a top sliding surface (11a) of the annular part (11), the top sliding surface (1a) being arranged on the annular part (11) in register with the opening (9), the leaktight rotary driver (6) including locking means (8) associated with the transmission piece (7) and suitable for coming to press against the outside face of the bottom of the bowl (27) and/or of the annular part (11) under the effect of the rotary annular gasket (10), the receptacle being **characterized in that** a static annular gasket (12) is mounted between the annular part (11) and the bowl (27).

2. A working receptacle according to claim 1, **characterized in that** the static annular gasket (12) is placed around the top sliding surface (11a) between the top face of the annular part (11) and the bowl (27).

3. A working receptacle according to claim 1 or claim 2, **characterized in that** the bowl (27) includes a series of ramps (19) around the opening (9), the ramps alternating with a series of setbacks (21) provided for receiving ramps (18) formed on the annular part (11), and alternating with a series of setbacks (20) provided for receiving the ramps (19) of the bowl (27).

4. A working receptacle according to claim 3, **characterized in that** the static annular gasket (12) is disposed between the top face of the annular part (11) and a collar (15) formed around the opening (9) above the ramps (19) of the bowl (27).

5. A working receptacle according to claim 4, **characterized in that** at least one abutment (28) is provided between the collar (15) and one of the ramps (19) of the bowl (27).

6. A working receptacle according to any one of claims 3 to 5, **characterized in that** the annular part (11) includes drive means (17) disposed in the zone extending between the top sliding surface (11 a) and the passage (16).

7. A working receptacle according to any one of claims 1 to 6, **characterized in that** the annular part (11) is a plane part.

8. A working receptacle according to any one of claims 1 to 7, **characterized in that** the annular part (11) is a metal part.

9. A working receptacle according to any one of claims 1 to 8, **characterized in that** the rotary annular gasket (10) includes a lip (24) that presses against the top sliding surface (11a).

10. A working receptacle according to any one of claims 1 to 9, **characterized in that** the locking means (8) of the leaktight rotary driver (6) are formed by a ring assembled by a bayonet coupling (22) with the transmission piece (7).

11. A working receptacle according to any one of claims 1 to 10, **characterized in that** the locking means (8) are suitable for coming to press against a bottom contact surface (11b) formed on the annular part (11) in register with the opening (9).

12. A household electrical appliance for preparing food comprising a stand (1) having a drive shaft (4) disposed on a top face thereof to drive a leaktight rotary driver (6) mounted in a passage (16) formed in the bottom of a working receptacle (5), the appliance being **characterized in that** it includes a working receptacle according to any preceding claim.
